# EUROPÄISCHE PATENTSCHRIFT

(11) **EP 3 429 947 B1**
(45) Veröffentlichungstag und Bekanntmachung des Hinweises auf die Patenterteilung: **05.10.2022**
(21) Anmeldenummer: 17710922.0
(22) Anmeldetag: 15.03.2017
(51) Int. Cl.: B65G 63/00, B65G 1/04, B65G 35/06

(54) **SYSTEM AUS EINEM REGALBEDIENGERÄT UND EINEM TRANSPORT- UND ÜBERGABESYSTEM ZUM EIN- UND AUSLAGERN ODER UMLAGERN VON STANDARDCONTAINERN**
SYSTEM OF A RETRIEVAL MACHINE AND A TRANSPORT AND HANDOVER SYSTEM FOR STORING AND REMOVING OR RELOCATING STANDARD CONTAINER IN HIGH-BAY WAREHOUSES, AND STORAGE
SYSTÈME COMPOSÉ D'UN TRANSTOCKEUR ET D'UN SYSTÈME DE TRANSPORT ET DE TRANSFERT POUR LE STOCKAGE ET LE DÉSTOCKAGE OU LE TRANSFERT DE CONTENEURS STANDARD ENTREPOSÉS DANS DES ENTREPÔTS À RAYONNAGES HAUTS

(30) Priorität: 15.03.2016 DE 102016204246
(43) Veröffentlichungstag der Anmeldung: 23.01.2019
(73) Patentinhaber: AMOVA GmbH, 57271 Hilchenbach (DE)
(72) Erfinder: HEIDE, Carsten, 57250 Netphen (DE); BRÜCK, Volker, 57555 Mudersbach (DE)
(74) Vertreter: Grosse, Wolf-Dietrich Rüdiger
(86) Internationale Anmeldenummer: PCT/EP2017/056140
(87) Internationale Veröffentlichungsnummer: WO 2017/158034

(56) Entgegenhaltungen:
- WO-A1-2005/001737
- WO-A1-2007/043085
- DE-A1- 4 120 922
- JP-U- S50 147 380
- US-A1- 2010 183 407

## Beschreibung

Die Erfindung betrifft ein Transport- und Übergabesystem zum Ein- und Auslagern oder Umlagern von Lagergut in Hochregallagern, insbesondere in einer Umschlaganlage eines See- oder Binnenhafens für die Lagerung von Standardcontainern, wobei das Hochregallager aus beliebig vielen, in Längsrichtung und der quer dazu verlaufenden Breitenrichtung des Hochregallagers aneinandergereihten und in der Höhe mehrere übereinanderliegende Regalfächer aufweisenden Lagermodulen besteht, die durch sich parallel zu den Ein- bzw. Auslagerungsseiten der Regalfächer bzw. Lagermodule erstreckende Gassen voneinander getrennt sind, wobei in jeder Gasse mindestens ein hin und her verfahrbares Regalbediengerät zum Transportieren sowie Ein- und Auslagern oder Umlagern des Lagerguts vorgesehen ist, und ein Regalbediengerät.

WO 2015/124342 A1 offenbart ein Transport- und Übergabesystem zum Ein- und Auslagern oder Umlagern von Standardcontainern in Hochregallagern, insbesondere in einer Umschlaganlage eines See- oder Binnenhafens für die Lagerung von Standardcontainern, wobei das Transport- und Übergabesystem Regalbediengeräte enthält, wobei das Hochregallager aus beliebig vielen, in Längsrichtung und der quer dazu verlaufenden Breitenrichtung des Hochregallagers aneinandergereihten und in der Höhe mehrere übereinanderliegende Regalfächer aufweisenden Lagermodulen besteht, die durch sich parallel zu den Ein- bzw. Auslagerungsseiten der Regalfächer bzw. der Lagermodule erstreckende Gassen voneinander getrennt sind, wobei in jeder Gasse mindestens ein hin und her verfahrbares Regalbediengerät zum Transportieren sowie Ein- und Auslagern oder Umlagern der Standardcontainer vorgesehen ist, wobei die Regalbediengeräte einen aus Vertikalständern und diese miteinander verbindenden Kopftraversen und Fußholmen bestehen den, mindestens der Höhe der mehrgeschossigen Lagermodule entsprechenden Rahmen mit einer an den Vertikalständern eine über An triebsmittel bewegte, zur links- und rechtsseitigen Bedienung der Regalfächer oder benachbarten Lagermodule mit orthogonal zur Gasse ein und ausrückbaren Lastaufnahmemitteln ausgebildete Hubwerksbühne aufweisen.

Die in ihren Abmessungen schmal gebauten, die Container mit ihren Längsseiten voran in die Regalfächer ein- bzw. auslagernden Regalbediengeräte sind flurgebunden in Längsrichtung der Gassen verfahrbar. Das Anheben und Absenken der mit Lastaufnahmemitteln versehenen Hubwerksbühne der Regalbediengeräte erfolgt über eine Seilzugvorrichtung bzw. ein Hubwerk, umfassend ein Seil, Seiltrommeln, Umlenkrollen, Motoren und Getriebe. An der Hubwerksbühne sind zum hängenden Transport der Container Lastaufnahmemittel vorgesehen, die äußerst platzsparend als schubweise gemeinsam mit einem angehängten Container horizontal ein- bzw. auszufahrende Teleskopgabeln bzw. -tische ausgebildet sind.

Zum Transfer der an der Zuführseite, diese ist in der Regel die dem Schiff zugewandte Seite des Hochregallagers, antransportierten bzw. am anderen Lagerende abzutransportierenden Container ist es erforderlich, vor bzw. hinter jeder Gasse entsprechende Bereitstellungsstationen vorzusehen, aus denen die Regelbediengeräte die Container zur Einlagerung übernehmen bzw. in die bei der Auslagerung die Container abgesetzt werden können. Das ist so gleichermaßen bei Hochregallagern zur Ein- und Auslagerung von beispielsweise zu Bunden (Coils) gewickelten Bändern, insbesondere gewalzten Metallbändern, der Fall, wobei die Bunde von Gestellen abgenommen und auf Gestelle bzw. Unterbauten in den Regalfächern abgestellt werden.

Bei einem aus der DE 44 39 740 C1 bekannten Container-Terminal werden hohe Umschlagszahlen, wie sie beispielsweise durch den Einsatz von mehreren Verlade- bzw. Containerbrücken an einem Schiff gewährleistet werden müssen, durch ein innerhalb einer Container-Umschlaganlage integriertes vollautomatisches Containertransportsystem im Zusammenspiel mit den Lagerkranen erreicht. Dazu sind auf einer höhenversetzten stufenförmigen Tragkonstruktion durch mehrere Stützen miteinander verbundene, höhenversetzte Fahrbahnebenen mit Be- und Entladepositionen angeordnet, wobei jede Ebene ein Fahrbahnnetz mit einer Vielzahl darauf fahrbarer, linearmotorbetriebener Transportpaletten aufweist. Abgesehen davon, dass sehr viele mit Linearmotorantrieben als berührungslose Antriebsmittel spezial ausgebildete Transportpaletten notwendig sind, ist mit der Fahrbahnen-Vernetzung ein großer Stahlbau-Aufwand unvermeidlich. Denn jede Ebene besitzt mehrere miteinander verbundene Fahrbahnen zum Bewegen der Transportpaletten auf einem Fahrbahnnetz zu Be- und / oder Entlade- und / oder Zulagerpositionen. Die verschiedenen bzw. einzelnen, durch Stützen miteinander verbundenen Ebenen werden durch eine stufenförmig höhenversetzte Tragkonstruktion vorgegeben.

Ein wie vorbeschrieben sehr großer Aufwand mit zudem erheblichen Stahlbauten wird bei Hochregallagern mit hochgeständerten Schienenbahnen auch dann erforderlich, wenn die Transferstationen auf die obersten Etagen des Hochregallagers in den Stahlbau integriert sind und von Dachaufbauten eingekammerte Lagerkrane, die die Gassen übergreifend alle aufeinanderfolgenden mehrgeschossigen Lagermodule bestreichen, die Verteilung der zugeführten Container an die Regalbediengeräte übernehmen.

Der Erfindung liegt die Aufgabe zugrunde, ein gattungsgemäßes Transport- und Übergabesystem zu schaffen, das einen weiter beschleunigten Umschlag von Standardcontainer (20 TEU- und 40 FEU-Container), mit verringertem Aufwand und weniger Stahlbauten ermöglicht. Diese Aufgabe wird durch ein System nach Anspruch 1 gelöst.

Ausgehend davon, dass die Gassen parallel zu den langen Seiten, d. h. den Längsseiten des Hochregallagers verlaufen, erstreckt sich die Querförder-Einrichtung bzw. erstrecken sich mehrere Querförder-Einrichtungen, die im Abstand voneinander an den Längsseiten verteilt vorgesehen werden können, über die gesamte Breite des Hochregallagers und enden vorteilhaft außerhalb des Hochregallagers neben dessen Längsseiten. Die Querförder-Einrichtung kann z. B. aus Rollgangsrollen bestehen, von denen zumindest einige angetrieben sind, auf denen in Paletten abgestellte Standardcontainer, darauf direkt abgestellte Behälter oder auf Gestellen abgestellte Coils in Förderrichtung ablaufen und zum weiteren Handling positioniert werden können. Das eingeförderte Lagergut kann dann von den Regelbediengeräten übernommen und in die Regalfächer eingelagert bzw. mit umgekehrten Bewegungsabläufen ausgelagert werden. Die Abfolge des Ein- und Auslagerns kann zeitlich erheblich verkürzt werden, denn die Regalbediengeräte brauchen keine großen Verfahrwege mehr zurückzulegen, weil die entweder alle Gassen oder bei unterteilter Ausführung der Querförder-Einrichtung zumindest einige, z. B. zwei oder drei, Gassen kreuzenden Querförder-Einrichtungen eine im Hochregallager gezielte Bereitstellung bzw. Verteilung des übernommenen, von außerhalb des Hochregallagers zugeführten Lagerguts und dessen Ein- und Ausfördern übernehmen. Die erfindungsgemäße Querförder-Einrichtung, die ggf. aus mehreren horizontal versetzt gegeneinander angeordneten, das Hochregallager querenden Teilstücken vorgesehen werden kann, ermöglicht es in jedem Fall, dass unterhalb der Fahrebene bzw. Fahrschienenebene der Regalbediengeräte zugeführte Lagergut im Hochregallager sowohl beim Ein- als auch beim Auslagern variabel zu händeln.

Eine bevorzugte Ausführung sieht vor, dass die Querförder-Einrichtung in einer Vertiefung des Lagerfundaments ausgebildet ist. Bei den Fundamentarbeiten lassen sich die Unterquerungen für die Querförder-Einrichtungen in einfacher Weise sogleich mit vorsehen, was die Herstellung begünstigt.

Wenn vorteilhaft unterhalb der Querförder-Einrichtung in der Vertiefung des Lagerfundaments eine Rücklaufstrecke zum Rücktransport von leeren Paletten, Förderwagen oder Untergestellen vorgesehen wird, wobei die mit der Querförder-Einrichtung kombinierte Rücklaufstrecke z. B. ebenfalls Rollgangsrollen oder dergleichen Förderer aufweisen kann, lässt sich erreichen, dass die das Lagergut aufnehmenden Mittel im geschlossenen Kreislauf zum Einsatz kommen können. Nach einer anderen, leicht abgewandelten Ausführung kann die Querförder-Einrichtung auf dem Lagerfundament der untersten Regelfachebene mindestens einer Reihe aufeinanderfolgender Lagermodule ausgebildet werden. In diesem Fall wird die Querförder-Einrichtung auf das vorhandene Fundament der untersten Regalfächer aufgebaut, was in einfacher Weise die Umrüstung eines bestehenden Hochregallagers mit einem Querförderer ermöglicht. Das Lagergut wird hierbei von der Längsseite des Hochregallagers her ein- und ausgefördert. Zur Ausschöpfung der vollen Lagerkapazität können nach der Belegung aller übrigen Regalfächer gleichwohl auch die Regalfächer der untersten Regalfachebene genutzt werden.

Auch bei dieser Variante wird nach einem vorteilhaften Vorschlag unterhalb der Querförder-Einrichtung im Lagerfundament eine Rücklaufstrecke zum Rücktransport von leeren Paletten, Tragegestellen oder Förderwagen im geschlossenen Kreislauf vorgesehen.

Optional kann die Rücklaufstrecke parallel verlaufend zur Querförder-Einrichtung vorgesehen werden, d. h. auf dem Lagerfundament der benachbarten untersten Regalfachebene oder auf dem Boden der Vertiefung des Fundaments. Während bei gegenüber der Querförder-Einrichtung tiefer liegender Rücklaufstrecke der Transportfluss in zwei Höhenebenen erfolgt, wobei die Höhendifferenz zum Anheben bzw. Absenken des Lagerguts bzw. der Paletten, Förderwagen oder dergleichen durch z. B. Hubtische überwunden werden kann, können bei parallel nebeneinander in einer Höhenebene verlaufender Anordnung von Querförder-Einrichtung und Rücklaufstrecke lineare Verschiebemittel, z. B. Zylinder, das Überleiten der leeren Paletten, Förderwagen oder dergleichen auf die Rücklaufstrecke übernehmen.

Es wird vorgeschlagen, dass bevorzugt Regalbediengeräte zum Einsatz kommen, die einen aus Vertikalständern und diese miteinander verbindenden Kopftraversen und Fußholmen bestehenden, der Höhe der mehrgeschossigen Lagermodule entsprechenden Rahmen mit einer an den Vertikalständern eine über Antriebsmittel bewegte, zur links- und rechtsseitigen Bedienung der Regalfächer der benachbarten Lagermodule mit orthogonal zur Gasse ein- und ausrückbaren Lastaufnahmemitteln ausgebildete Hubwerksbühne aufweisen, wie an sich bekannt, wobei erfindungsgemäß der Fußholm zum Durchheben des Lagerguts mit einer Durchgangsöffnung rahmenartig ausgebildet ist. Die der größten vorkommenden Abmessung des Lagerguts angepasste Durchgangsöffnung ermöglicht den freien Durchtritt des Lagerguts beim Anheben von der bzw. Absenken auf die in der Fundament-Vertiefung angeordnete Querförder-Einrichtung. Das gilt so gleichermaßen bei Nutzung der untersten Regalfachebene für die Querförder-Einrichtung. Die Regalbediengeräte sind hierbei erfindungsgemäß auf zwei in den Gassen im horizontalen Abstand parallel voneinander oberhalb der untersten Regalfachebene angeordneten Schienen verfahrbar, d. h. im Übergang von der untersten zur darüber folgenden Regalfachebene. Ein solches im Fußholm zum Durchheben des Lagerguts eine Durchgangsöffnung aufweisendes Regalbediengerät ermöglicht zudem auch ein Handling von in den Gassen unterhalb der Fahrschienenebene bereitgestelltem Lagergut.

Das Handling des Lagerguts unterhalb der Fahrebene der Regalbediengeräte wird in vorteilhafter Weise dadurch begünstigt, dass die Vertikalständer der Rahmen über den Fußholm hinaus nach unten verlängert sind und ein Stück in die unterste Regalfachebene vorkragen. Es bietet sich damit eine Möglichkeit zur zentrierten Führung der sich absenkenden bzw. anhebenden Hubwerksbühne des Regalbediengerätes über diese nach unten verlängerte Strecke, z. B. mittels sich an den Rahmenverlängerungen abstützenden Rollen.

Weitere Merkmale und Einzelheiten der Erfindung ergeben sich aus den Ansprüchen und der nachfolgenden Beschreibung von in den Zeichnungen für den Umschlag von Standardcontainern schematisch dargestellten Ausführungsbeispielen der Erfindung.

Es zeigen:

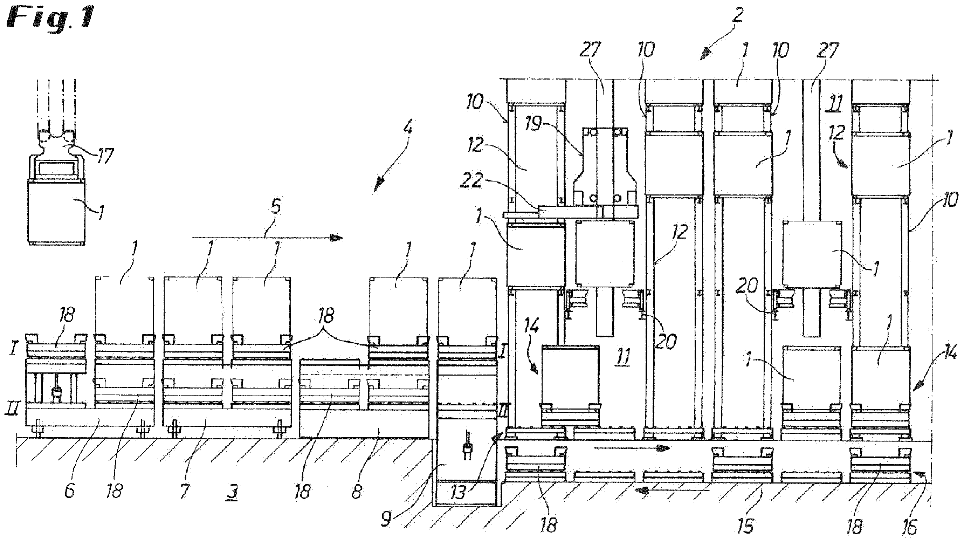

- Figur 1: als Teilansicht einer Container-Umschlaganlage in einem Querschnitt eine einem Hochregallager vorgeschaltete Transferstation zum Übernehmen der von einem nicht dargestellten Schiff zugeführten Container und Zufördern bis vor das Hochregallager zur Einlagerung mittels in dessen Gassen auf dort hochgelegten Schienen verfahrbaren Regalbediengeräten bzw. zum Abtransport bei der Auslagerung mit dann umgekehrten Bewegungsabläufen, wobei das Hochregallager in linearer Ausrichtung zur Transferstation eine in der untersten Regalfachebene ausgebildete Querförder-Einrichtung und eine im Lagerfundament versenkte bzw. tiefergelegte Rücklaufstrecke aufweist;
- Figur 2: als Einzelheit einer Container-Umschlaganlage ein Hochregallager in einem Querschnitt , wobei in einer gegenüber Figur 1 anderen Zuordnung die hier nicht dargestellten Transferstationen den Mündungen der Gassen vorgeschaltet sind und die Querförder-Einrichtungen einschließlich Rücklaufstrecken in Vertiefungen des Lagerfundaments vorgesehen sind und (nicht dargestellt) außerhalb des Hochregallagers neben dessen Längsseiten enden;
- Figur 3: als Einzelheit der Figur 2 eine Teil-Längsansicht einer Gasse mit darin auf dem Fundament verfahrbarem Regalbediengerät;
- Figur 4: als Gesamtansicht ein Regalbediengerät von der den Lagermodulen bzw. Regalfächern zugewandten Längsseite her gesehen;
- Figur 5: als Einzelheit des Regalbediengerätes der Figur 4 im Wesentlichen den Fußholm bzw. Fahrrahmen mit der zusammen mit einem angehängten Container bis bereits oberhalb einer untersten Regalfachebene oder einer in einer Vertiefung des Fundaments (vgl. Figur 2) angeordneten Querförder-Einrichtung abgesenkten Hubwerksbühne; und
- Figur 6: eine Draufsicht der Figur 5.

Zum Entladen von Containern 1 aus einem Schiff und Einlagern in ein Hochregallager 2 bzw. umgekehrt Auslagern und Beladen eines Schiffes oder eines abtransportierenden Fahrzeugs, ist nach Figur 1 an der dem Kai 3 zugewandten Seite dem Hochregallager 2 mindestens eine Transferstation 4 vorgeschaltet. Diese weist in linearer Aufeinanderfolge in Zuführrichtung (Pfeil) 5 auf dem Kai von außen zum Hochregallager 2 hin einen Übernahmewagen 6, ein aus der Linie heraus parallel zum Hochregallager 2 verfahrbares Verteilerfahrzeug 7, eine stationäre Ablage 8 und einen Hubtisch 9 auf. Der Transferstation 4 schließt sich in einer Linie eine alle der im Hochregallager 2 zwischen über die Breite im Abstand voneinander aufeinanderfolgenden Lagermodulen 10 mit darin über die gesamte Höhe vorgesehenen Regalfächern 12 parallel zu den Längsseiten des Hochregallagers verlaufenden Gassen 11 kreuzende Querförder-Einrichtung 13 an. Die Querförder-Einrichtung 13 ist in der untersten Regalfachebene 14 auf dem Lagerfundament 15 angeordnet. Unterhalb der Querförder-Einrichtung ist im Lagerfundament 15 eine Rücklaufstrecke 16 ausgebildet.

Die Transferstation 4 ist in einer Zwei-Ebenen-Ausführung vorgesehen, d. h. der Übernahmewagen 6, das Verteilerfahrzeug 7, die stationäre Ablage 8 und der Hubtisch 9 besitzen eine obere Ebene I und eine untere Ebene II, wobei der Hubtisch 9 dazu dient, Höhendifferenzen zwischen einerseits der oberen Ebene I der Transferstation 4 sowie der Querförder-Einrichtung 13 und andererseits der unteren Ebene II sowie der Rücklaufstrecke 16 zu überwinden und den jeweiligen linearen Verlauf zu gewährleisten. Denn der von einem Lastaufnahmemittel 17 einer nicht dargestellten Verladebrücke aus einem Schiff abgehobene Container 1, gegebenenfalls können von dem Lastaufnahmemittel 17 sogleich zwei Container 1 gleichzeitig abgehoben und auf den Übernahmewagen 6 abgegeben werden, wird mit seiner Längsseite in Zuführrichtung 5 weisend auf der oberen Ebene I des Übernahmewagens 6 auf eine dort bereitgestellte Palette 18 abgestellt, auf die oberste Ebene I des Verteilerfahrzeugs 7 übergeleitet und durch Verfahren des Verteilerfahrzeugs 7 parallel zum Hochregallager 2 bis vor eine freie stationäre Ablage 8 einer der mehreren Transferstationen 4 transportiert und von dieser auf die oberste Ebene I des Hubtisches 9 gefördert.

Der Hubtisch 9 senkt die Palette 18 mit dem Container 1 bis zur fluchtenden Lage mit der Querförder-Einrichtung 13 ab, die dann die zuvor übernommene Palette 18 mit dem Container 1 in eine der Gassen 11 zur Übernahme durch ein in jeder Gasse 11 angeordnetes Regalbediengerät 19 positioniert. Die nach dem Übernehmen der Container 1 durch die Regalbediengeräte 19 freien Paletten 18 werden am Ende der Querförder-Einrichtung 13 von einem Hubmittel auf die im Lagerfundament 15 versenkt angeordnete, tieferliegende Rücklaufstrecke 16, die z. B. ebenfalls Rollgangsrollen oder dergleichen aufweisen kann, abgesenkt und entgegen der Zuführrichtung 5 bis zunächst auf den mit seiner unteren Ebene II in Flucht mit der Rücklaufstrecke 13 verstellten Hubtisch 9 der Transferstation 4 transportiert. Der Hubtisch 9 wird danach angehoben, bis seine untere Ebene II mit den unteren Ebenen II der stationären Ablage 8, des Verteilerfahrzeugs 7 und des Übernahmewagens 6 fluchtet, so dass die Paletten 18 von den Fördermitteln der vorgenannten Transferstation-Einheiten in ihre Ausgangsposition zum erneuten Einsatz zurückgelangen. Der Übernahmewagen 6 ist dazu ebenfalls mit einem Hubmittel ausgerüstet, das die Paletten 18 aus der unteren Ebene II in die obere Ebene I anhebt.

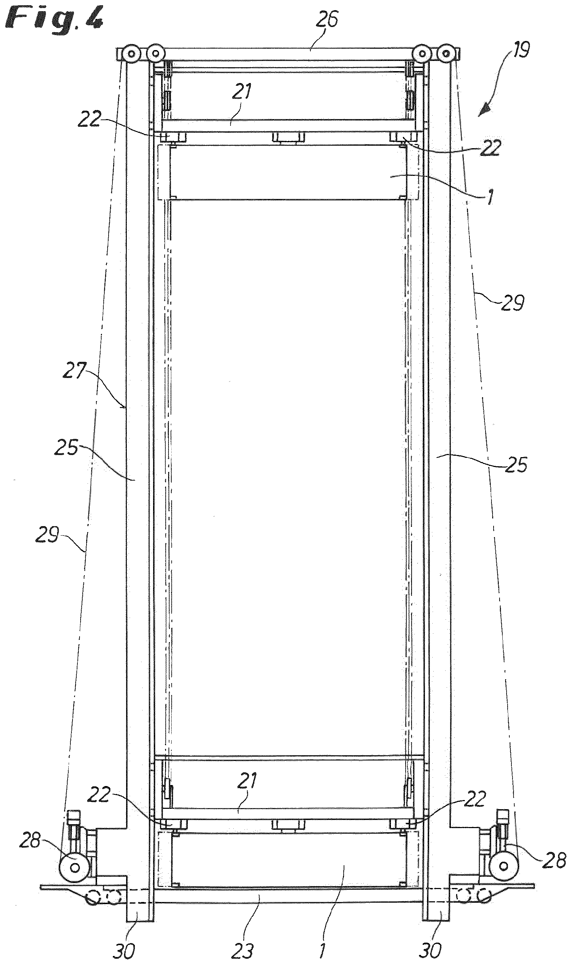

Die Regalbediengeräte 19 bewerkstelligen das Ein- und Auslagern oder Umlagern der Container 1 in die bzw. aus den Regalfächern 12 der Lagermodule 10 und sind im Ausführungsbeispiel nach Figur 1 auf zwischen der untersten (ersten) Regalfachebene 14 und der darüber folgenden (zweiten) Regalfachebene zwei im horizontalen Abstand voneinander in den Gassen 11 angeordneten Schienen 20 verfahrbar. Zum Einlagern wird ein in einer Gasse 11 positionierter Container 1 von seiner Palette 18 abgehoben, wozu eine Hubwerksbühne 21 (vgl. Fig. 4), die zumindest zwei, wie aus der WO 2015/123342 A1 bekannt, schubweise teleskopierbare Lastaufnahmemittel 22 aufweisen kann, wobei diese zur Anpassung an unterschiedliche Längen der Container 1 aufeinander zu oder voneinander weg bewegbar sein können, soweit abgesenkt, bis die teleskopartigen Lastaufnahmemittel 22 mit ihren Verriegelungsmitteln zur Verriegelung über die Anhängepunkte des Containers 1 gelangen. Der verriegelt angehängte Container 1 kann danach durch Anheben der Hubwerksbühne 21 und Verfahren des Regelbediengeräts 19 vor ein beliebiges Regalfach 12 der benachbarten Lagermodule 10 verbracht und durch schubweises Teleskopieren der Lastaufnahmemittel 22 (Teleskopiergabeln oder -tische) in das gewünschte Regalfach 12 eingelagert werden. Das Auslagern erfolgt mit umgekehrten Bewegungsabläufen.

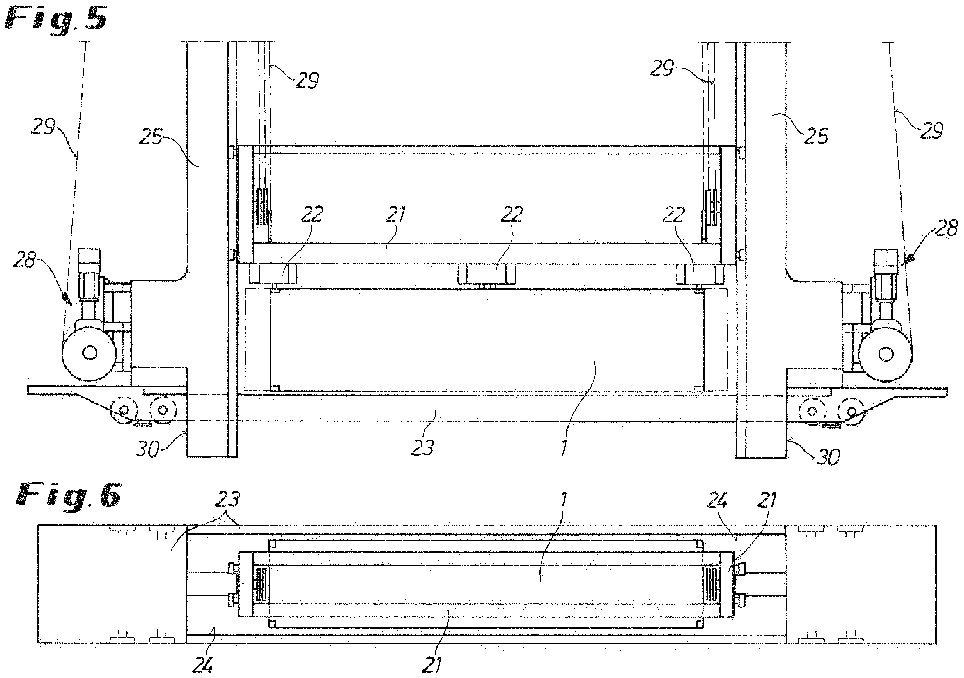

Der freie Durchtritt der aus der untersten Regalfachebene 14 übernommenen Container 1 beim Einlagern in die darüber folgenden Regalfachebenen wird, wie in Figur 6 dargestellt, durch eine rahmenartige Ausbildung des Fußholms 23 der Regalbediengeräte 19 mit einer Durchgangsöffnung 24 ermöglicht.

Die durch die teleskopierbaren Lastaufnahmemittel 22 sehr schmale, der Breitenabmessung der Container entsprechende, raumsparende Gassen 11 ermöglichenden Regalbediengeräte 19 weisen, wie insbesondere aus der die Hubwerksbühne 21 mit einem angehängten Container 1 in der obersten Position und in einer nach unten abgesenkten Position (vgl. Figur 5) zeigenden Figur 4 ersichtlich ist, einen aus Vertikalständern 25 und eine diese miteinander verbindende Kopftraverse 26 sowie dem verbindenden, mit der Durchgangsöffnung 24 für die Container 1 / das Lagergut ausgebildeten Fußholm 23 bestehenden, gen der Höhe der mehrgeschossigen Lagermodule 10 entsprechenden Rahmen 27 auf. Das Heben und Senken der Hubwerksbühne 21 erfolgt über am Fußholm 23 vorgesehene Hubwerke 28 und an der Kopftraverse 26 über Rollen umgelenkte Seile 29. Beim Einsatz insbesondere in einer Ausbildung der Querfördereinrichtung 13 nach Figur 1 sind die Vertikalständer 25 mit einer über eine kurze Wegstrecke nach unten über den Fußholm 23 vorkragenden Verlängerung 30 vorgesehen (vgl. Figur 4).

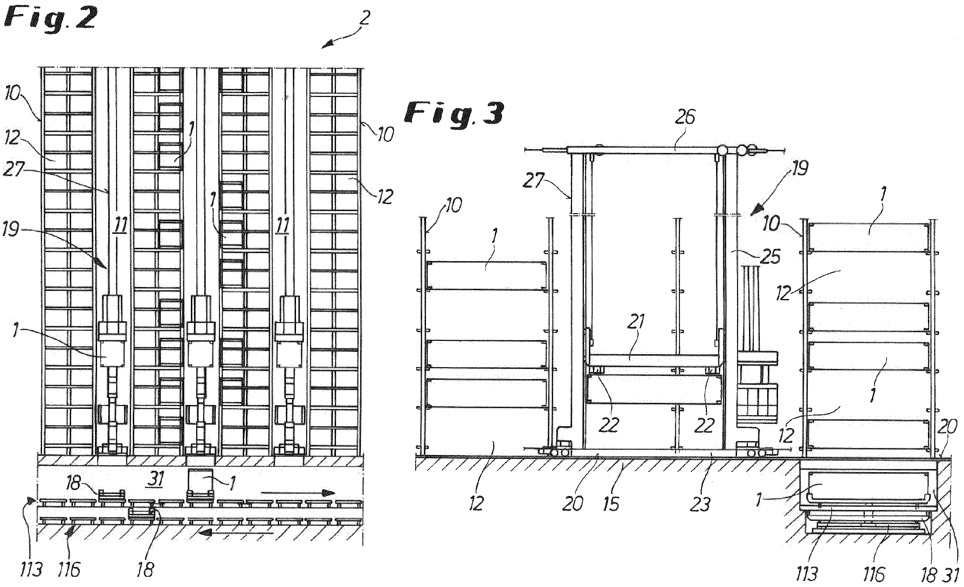

Bei der Umschlaganlage der Figuren 2 und 3 sind die Querförder-Einrichtungen 113 und die damit tieferliegenden kombinierten Rücklaufstrecken 116 komplett versenkt in das Hochregallager 2 unterquerenden Vertiefungen 31 des Lagerfundaments 16 vorgesehen. Die Regalbediengeräte 19 können damit ebenerdig, d. h. direkt auf dem Lagerfundament 15 verfahren werden (vgl. Figur 3). Die zuvor beschriebenen Transferstationen 4 sind hier an der Kaiseite in einer mit den Gassen 11 fluchtenden Lage vorgesehen. Die von den Lastaufnahmemitteln 17 der Verladebrücken aus dem Schiff zugeführten Container 1 werden wiederum auf Übernahmewagen 6 in Paletten 18 abgestellt, auf das Verteilerfahrzeug 7 und von diesem auf die stationären Ablagen 8 übergeleitet. Für den Fall, dass die Container 1 nicht mit ihren schmalen Stirnseiten, sondern mit ihren Breitseiten in Gassenrichtung weisend von den Lastaufnahmemitteln 17 der Verladebrücken zugeführt werden, kann den stationären Ablagen 8 in der Transferstation ein die Container 1 ausrichtender Drehtisch vorgeschaltet werden. Die auf diese Weise vor den Gassen positioniert bereit gestellten Container 1 werden von dort von den Regalbediengeräten 19 zur Einlagerung in die Regalfächer 12 der Lagermodule 10 übernommen und die leeren Paletten 19 werden von dem Hubtisch 9 zur Rückführung auf die untere Ebene II abgesenkt.

Das Auslagern der Container 1 nach deren Absenkung durch die Durchgangsöffnung 24 der Fußholme 23 der Regalbediengeräte 19 in die Vertiefung 31 erfolgt über die Querförder-Einrichtung 113 und der Rücktransport der leeren Paletten 18 über die Rücklaufstrecke 116, wobei die Querförder-Einrichtungen 113 und die Rücklaufstrecken 116 außerhalb des Hochregallagers 1 neben dessen längsseitigen Außenwänden enden und dort Hubtische für die Container 1 und andererseits die leeren Paletten 18 vorgesehen sind. Die angehobenen Container 1 können von Kranen zur Beladung beispielsweise eines Lastkraftwagens oder eines Schiffes übernommen werden. Die abgesenkten leeren Paletten 18 werden von der Rücklaufstrecke 116 bzw. deren Fördermittel zum Anheben auf die höhere Ebene der Querförder-Einrichtung 113 transportiert und von dieser zur erneuten Beladung mit einem auszulagernden Container 1 unter einer Gasse positioniert.

### Bezugszeichenliste

- 1: Container / Lagergut
- 2: Hochregallager
- 3: Kai
- 4: Transferstation
- 5: Zuführrichtung (Pfeil)
- 6: Übernahmewagen
- 7: Verteil erfahrzeug
- 8: Stationäre Ablage
- 9: Hubtisch
- 10: Lagermodul
- 11: Gasse
- 12: Regalfach
- 13; 113: Querförder-Einrichtung
- 14: unterste Regalfachebene
- 15: Lagerfundament
- 16; 116: Rücklaufstrecke
- 17: Lastaufnahmemittel (der Verladebrücke)
- 18: Palette
- 19: Regalbediengerät
- 20: Schienen des Regalbediengerätes
- 21: Hubwerksbühne
- 22: Lastaufnahmemittel
- 23: Fußholm / Fahrrahmen
- 24: Durchgangsöffnung
- 25: Vertikalständer
- 26: Kopftraverse
- 27: Rahmen
- 28: Hubwerk
- 29: Seil
- 30: Verlängerung (der Vertikalständer)
- 31: Vertiefung

- I: obere Ebene
- II: untere Ebene

## Patentansprüche

1. Transport- und Übergabesystem zum Ein- und Auslagern oder Umlagern von Standardcontainern (1) in Hochregallagern (2), insbesondere in einer Umschlaganlage eines See- oder Binnenhafens für die Lagerung von Standardcontainern, wobei das Transport- und Übergabesystem Regalbediengeräte (19) umfasst, wobei das
Hochregallager (2) aus beliebig vielen, in Längsrichtung und der quer dazu verlaufenden Breitenrichtung des Hochregallagers (2) aneinandergereihten und in der Höhe mehrere übereinanderliegende Regalfächer (12) aufweisenden Lagermodulen (10) besteht, die durch sich parallel zu den Ein- bzw. Auslagerungsseiten der Regalfächer (12) bzw. der Lagermodule (10) erstreckende Gassen (11) voneinander getrennt sind, wobei in jeder Gasse (11) mindestens ein hin und her verfahrbares Regalbediengerät (19) zum Transportieren sowie Ein- und Auslagern oder Umlagern der Standardcontainer (1) vorgesehen ist, wobei
das Hochregallager (1) mit wenigstens einer zumindest einige Gassen (11) kreuzenden, die zugeführten Standardcontainer (1) in das Hochregallager (2) einfördernden und / oder daraus ausfördernden Querförder-Einrichtung (13; 113) ausgebildet ist,
wobei die Regalbediengeräte (19) einen aus Vertikalständern (25) und diese miteinander verbindenden Kopftraversen (26) und Fußholmen (23) bestehenden, mindestens der Höhe der mehrgeschossigen Lagermodule (10) entsprechenden Rahmen (27) mit einer an den Vertikalständern (25) eine über Antriebsmittel bewegte, zur links- und rechtsseitigen Bedienung der Regalfächer (12) oder benachbarten Lagermodule (10) mit orthogonal zur Gasse (11) ein- und ausrückbaren Lastaufnahmemitteln (22) ausgebildete Hubwerksbühne (21) aufweisen,
**dadurch gekennzeichnet, dass**
der Fußholm (23) zum Durchheben der Standardcontainer (1) mit einer Durchgangsöffnung (24) rahmenartig ausgebildet ist.

2. System nach Anspruch 1,
**dadurch gekennzeichnet,**
**dass** die Regalbediengeräte (19) auf zwei in den Gassen (11) im horizontalen Abstand parallel voneinander oberhalb der untersten Regalfachebene (14) angeordneten Schienen (20) verfahrbar sind.

3. System nach Anspruch 2,
**dadurch gekennzeichnet,**
**dass** die Vertikalständer (25) der Rahmen (27) der Regalbediengeräte (19) über den Fußholm (23) hinaus nach unten verlängert sind.

## Claims

1. A transport and transfer system for the storage and retrieval or transfer of standard containers (1) in high-bay storages (2), in particular, in a transhipment facility of a maritime or inland port for the storage of standard containers,
wherein the transport and transfer system comprises storage and retrieval machines (19),
wherein the high-bay storage (2) consists of any number of storage modules (10) comprising a plurality of shelf compartments (12) stacked on top of one another and lined up aloft in the longitudinal direction and in the width direction of the high-bay storage (2) transversely to this, which are separated from each other by aisles (11) extending parallel to the storage or retrieval sides of the shelf compartments (12) or the storage modules (10), wherein, in each aisle (11), at least one storage and retrieval machine (19) that can be moved back and forth is provided for transporting, storing and retrieving or relocating the standard containers (1),
wherein
the high-bay storage (2) with at least one transverse conveying device (13; 113) that crosses a plurality of aisles (11) conveys the supplied standard containers (1) into and/or out of the high-bay storage (2) is formed,
wherein
the storage and retrieval machines (19) comprise a frame (27) consisting of vertical stands (25) along with head trusses (26) and foot bars (23) connecting the vertical stands (25) to one another and corresponding at least to the height of the multi-level storage modules (10) with a hoist platform (21) with extendable and retractable load-handling devices (22) orientated orthogonally to the aisle (11) that can be moved on the vertical stands (25) via a means of propulsion for operating the shelf compartments (12) or the adjacent storage modules (10) on the left or right side,
**characterized in that**
the foot bar (23) for lifting the standard containers (1) with a passage opening (24) is shaped like a frame.

2. The system according to Claim 1,
**characterized in that**
the storage and retrieval machines (19) can be moved on two rails (20) arranged in the aisles (11) at a horizontal distance parallel to each other above the lowest shelf compartment level (14).

3. The system according to Claim 2,
**characterized in that**
the vertical stands (25) of the frames (27) of the storage and retrieval machines (19) are extended downwards beyond the foot bar (23).

## Revendications

1. Système de transfert pour le stockage et le déstockage ou le transbordement de conteneurs normalisés (1) dans des entrepôts à rayonnages hauts (2), en particulier dans une installation de transbordement d'un port maritime ou fluvial pour le stockage de conteneurs normalisés,
sachant que le système de transport et de transfert comprend des transstockeurs (19),
sachant que l'entrepôt à rayonnages hauts (2) est composé d'un nombre quelconque de modules d'entreposage (10) alignés dans la direction longitudinale et dans la direction de la largeur passant transversalement à ceux-ci de l'entrepôt à rayonnages hauts (2) et comportant plusieurs compartiments de rayonnages (12) superposés en hauteur, qui sont séparés les uns des autres par des travées (11) s'étendant parallèlement aux côtés de stockage ou de déstockage des compartiments de rayonnages (12) ou des modules d'entreposage (10), sachant qu'au moins un transstockeur (19) pouvant être déplacé en mouvement de va-et-vient est prévu dans chaque travée (11) pour le transport ainsi que pour le stockage et le déstockage ou le transbordement des conteneurs normalisés (1),
sachant que l'entrepôt à rayonnages hauts (2) est constitué par au moins un dispositif de transport transversal (13 ; 113) croisant au moins plusieurs travées (11) entrant dans l'entrepôt à rayonnages hauts (2) les conteneurs normalisés (1) acheminés et/ou les extrayant de ceux-ci,
sachant que les transstockeurs (19) comportent un cadre (27) composé de montants verticaux (25) et de traverses de tête (26) et de longerons inférieurs (23) reliant ceux-ci entre eux, correspondant au moins à la hauteur des modules d'entreposage (10) à plusieurs étages avec une plate-forme élévatrice (21) constituée avec des moyens de logement de charge (22) pouvant rentrer et sortir de façon orthogonale par rapport à la travée (11) sur les montants verticaux (25) et déplacée par des moyens d'entraînement pour la manutention côté gauche et droit des compartiments de rayonnages (12) ou des modules d'entreposage (10) voisins,
**caractérisé en ce que**
le longeron inférieur (23) est constitué comme un cadre avec une ouverture de passage (24) pour lever à travers les conteneurs normalisés (1).

2. Système selon la revendication 1,
**caractérisé en ce que**
les transstockeurs (19) peuvent être déplacés sur deux rails (20) disposés dans les travées (11) à une distance horizontale parallèlement l'un à l'autre au-dessus des plans de compartiment de rayonnages (14) les plus bas.

3. Système selon la revendication 2,
**caractérisé en ce que**
les montants verticaux (25) des cadres (27) des transstockeurs (19) sont prolongés vers le bas au-delà du longeron inférieur (23).
